# EUROPEAN PATENT APPLICATION

(11) **EP 2 130 873 A1**
(43) Date of publication of application: **09.12.2009**
(21) Application number: 09251288.8
(22) Date of filing: 11.05.2009
(51) Int. Cl.: C08L 83/14, C08K 5/5419

(54) **Room temperature curable organopolysiloxane composition**

(30) Priority: 14.05.2008 JP 2008126951
(71) Applicant: Shin-Etsu Chemical Co., Ltd., Tokyo (JP)
(72) Inventor: Iwasaki, Isao, Annaka-shi, Gunma-ken (JP); Sakamoto, Takafumi, Annaka-shi, Gunma-ken (JP); Kimura, Tsuneo, Annaka-shi, Gunma-ken (JP)
(74) Representative: Stoner, Gerard Patrick

(57) **Abstract**

An RTV organopolysiloxane composition is provided comprising (A) a diorganopolysiloxane capped at both ends of its molecular chain with hydroxysilyl, alkoxysilyl or alkoxyalkoxysilyl and having a viscosity of 20-1,000,000 mPa-s at 25°C, (B) a bis(alkoxysilylalkyl)disiloxane compound, and (C) a curing catalyst. The composition is fast curable into a silicone rubber which establishes a firm adhesion to substrates with an active surface such as float glass and maintains the adhesion even in a harsh environment as immersed in hot water over a long term.

## Description

### TECHNICAL FIELD

This invention relates to organopolysiloxane compositions which cure at room temperature into silicone rubber, and more particularly, to RTV organopolysiloxane compositions which are fast curable and cure into products which are adherent to glass, heat-reflective glass, metals and plastics, and durable to maintain adhesion even in a harsh environment.

### BACKGROUND

Known in the art are RTV organopolysiloxane compositions comprising a diorganopolysiloxane having silanol or alkoxysilyl groups at ends of its molecular chain, an alkoxysilane, an aminoalkyl-containing alkoxysilane, and a curing catalyst. Although these compositions quickly adhere to substrates on curing, a problem is left that when immersed in water for a long period of time, the cured coatings will separate from the substrates, especially from those substrates having an active surface like float glass or figured glass. They cannot be used as sealing materials for structure bonding and double-glazed unit secondary sealing where long-term adhesion reliability is required.

Where RTV organopolysiloxane compositions are applied to active surface substrates, long-term adhesion reliability may be achieved by previous mechanical or chemical treatment of the substrates. Such treatments are labor and cost intensive, and some substrates are unamenable to any treatments.

It is known in the art that organopolysiloxane compositions are improved in durable adhesion during hot water immersion by adding an epoxyalkylalkoxysilane thereto. Some organopolysiloxane compositions are proposed in which a mixture or reaction product of an aminoalkylalkoxysilane and an epoxyalkylalkoxysilane is incorporated for improving adhesion and adhesion reliability (see JP-B S52-08854 and JP-B S63-23226).

However, the silicone rubbers obtained by curing these RTV organopolysiloxane compositions lack durable adhesion in water. In particular, they suffer a substantial lowering of adhesion to float glass in a harsh environment like hot water immersion. Another problem is a short build-up of rubber hardness as the measure indicative of a curing rate.

Another RTV organopolysiloxane composition is proposed in JP 2914838 in which a diorganopolysiloxane is combined with a tetrafunctional alkoxysilane, a trifunctional alkoxysilane, and an amino-containing silane for improving adhesion to substrates in water. The organopolysiloxane composition of JP 2914838, however, is still insufficient in maintaining adhesion to active surface substrates like float glass following hot water immersion.

Further organopolysiloxane compositions are proposed in JP-A S64-60656 and JP-A 2003-221506 in which an organopolysiloxane is combined with a disilaalkane compound such as 1,2-bis(trimethoxysilyl)ethane or 1,6-bis(trimethoxysilyl)hexane and a carbasilatrane compound as a tackifier for restraining reduction of bond strength following hot water immersion.

However, the disilaalkane compounds illustrated and used in JP-A S64-60656 are highly volatile due to their low molecular weight and release an offensive odor, giving a negative impact on the working environment during preparation and curing of the composition. Also, the disilaalkane compounds having C₄-C₁₀ alkylene described in JP-A 2003-221506 are impractical and unacceptable for industrial use because of their expensiveness due to the scarcity value of diene compounds from which they are prepared.

Citation List
Patent Document 1: JP-B S52-08854
Patent Document 2: JP-B S63-23226
Patent Document 3: JP 2914838
Patent Document 4: JP-A S64-60656
Patent Document 5: JP-A 2003-221506

An aim herein is to provide new and useful RTV organopolysiloxane compositions, preferably having a high curing rate and curing into products having good adhesion to substrates with an active surface such as float glass, and long-term adhesion reliability even in a harsh environment as immersed in hot water.

The invention provides a room temperature curable organopolysiloxane composition comprising
(A) 100 parts by weight of a diorganopolysiloxane capped at both ends of its molecular chain with a hydroxysilyl, alkoxysilyl or alkoxyalkoxysilyl group and having a viscosity of 20 to 1,000,000 mPa-s at 25°C,
(B) 0.5 to 20 parts by weight of a bis(alkoxysilylalkyl)disiloxane compound, and
(C) 0.001 to 20 parts by weight of a curing catalyst.

In a preferred embodiment, the diorganopolysiloxane (A) has the general formula (1). 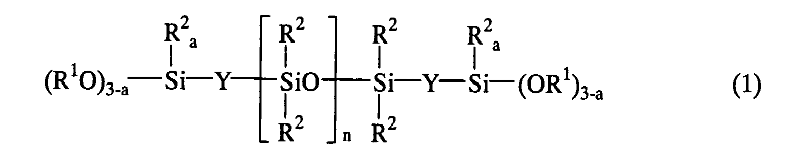 Herein R¹ is hydrogen, C₁-C₁₀ alkyl or C₂-C₁₀ alkoxyalkyl, R² is a C₁-C₁₀ group selected from the group consisting of a monovalent hydrocarbon group, monovalent halogenated hydrocarbon group, and cyanoalkyl group, "a" is 2 when R¹ is hydrogen and 0 or 1 when R¹ is C₁-C₁₀ alkyl or C₂-C₁₀ alkoxyalkyl, Y is oxygen, a divalent C₁-C₆ hydrocarbon group or a group of the general formula (2): 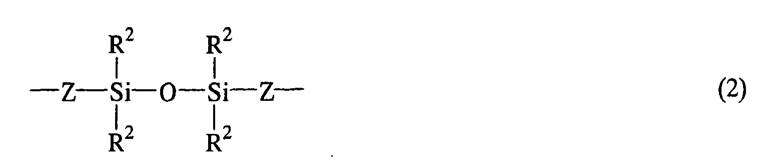 wherein R² is as defined above and Z is a divalent C₁-C₆ hydrocarbon group, and n is such a number that the diorganopolysiloxane may have a viscosity of 20 to 1,000,000 mPa-s at 25°C.

In a preferred embodiment, the disiloxane compound (B) has the general formula (3): 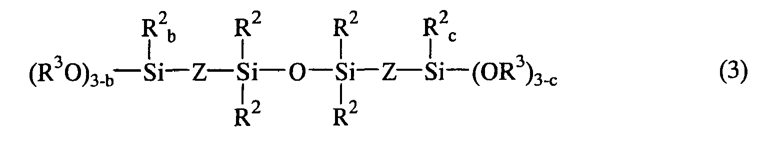 wherein Z and R² are as defined in claim 2, R³ is C₁-C₁₀ alkyl or C₂-C₁₀ alkoxyalkyl, b and c are each 0 or 1.

In a preferred embodiment, component (C) is an organotin compound.

Preferably the composition may further comprise (D) 0.1 to 20 parts by weight of a silane coupling agent, typically having at least one amino group in the molecule, and/or (E) 10 to 200 parts by weight of calcium carbonate.

The term "room temperature curable" is often abbreviated herein as RTV since it is interchangeable with room temperature vulcanizable and a well-known term. Advantageous Effects

We find that RTV organopolysiloxane compositions as proposed herein can have a high curing rate and cure into a silicone rubber which achieves tight adhesion to substrates with an active surface such as float glass and maintains over a long term that adhesion even in a harsh environment as immersed in hot water.

### FURTHER EXPLANATIONS; OPTIONS AND PREFERENCES

The RTV organopolysiloxane composition is defined as comprising
(A) 100 parts by weight of a diorganopolysiloxane capped at both ends of its molecular chain with a hydroxysilyl, alkoxysilyl or alkoxyalkoxysilyl group and having a viscosity of 20 to 1,000,000 mPa-s at 25°C,
(B) 0.5 to 20 parts by weight of a bis(alkoxysilylalkyl)disiloxane compound, and
(C) 0.001 to 20 parts by weight of a curing catalyst.

Component (A) is a base component in the inventive composition. It is a diorganopolysiloxane capped at both ends of its molecular chain with a hydroxysilyl, alkoxysilyl or alkoxyalkoxysilyl group. It should have a viscosity at 25°C of 20 to 1,000,000 mPa-s, and preferably 100 to 100,000 mPa-s, because too low a viscosity leads to poor rubber elasticity following cure, and too high a viscosity interferes with working. The molecular structure of this organopolysiloxane is substantially linear although the molecular chain may be partially branched. Note that the viscosity is as measured by a rotational viscometer.

The preferred component (A) is a diorganopolysiloxane having the general formula (1). 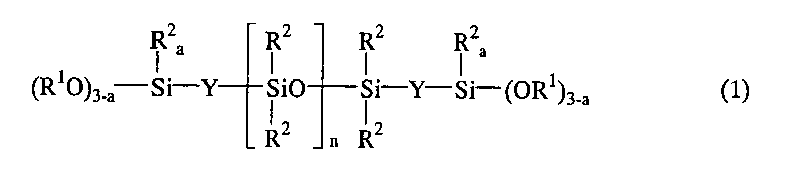 Herein R¹ is selected from among hydrogen, C₁-C₁₀ alkyl groups such as methyl, ethyl, propyl, butyl and octyl, and C₂-C₁₀ alkoxyalkyl groups such as methoxymethyl, methoxyethyl and ethoxymethyl. Inter alia, hydrogen, methyl or ethyl is preferred. R² is a C₁-C₁₀ group selected from monovalent hydrocarbon groups, halogenated hydrocarbon groups, and cyanoalkyl groups. Examples include alkyl groups such as methyl, ethyl, propyl, butyl and octyl, cycloalkyl groups such as cyclopentyl and cyclohexyl, alkenyl groups such as vinyl and allyl, aryl groups such as phenyl, tolyl and naphthyl, aralkyl groups such as benzyl, phenylethyl and phenylpropyl, monovalent halogenated hydrocarbon groups such as trifluoropropyl and chloropropyl, and cyanoalkyl groups such as β-cyanoethyl and γ-cyanopropyl. Inter alia, methyl is most preferred. The subscript "a" is 2 when R¹ is hydrogen, and "a" is 0 or 1 when R¹ is alkyl or alkoxyalkyl.

Y is an oxygen atom, a divalent C₁-C₆ hydrocarbon group or a group of the general formula (2): 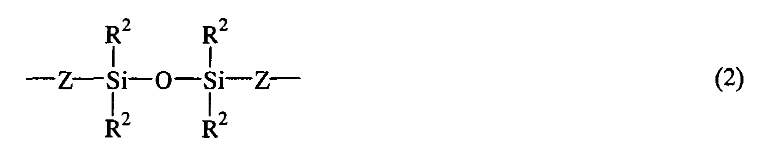 wherein R² is as defined above and Z is a divalent C₁-C₆ hydrocarbon group. The divalent hydrocarbon groups of Z are preferably C₁-C₆ alkylene groups such as methylene, ethylene, propylene, butylene and hexylene, with ethylene being most preferred. A hydrogen atom on alkylene may be substituted by a monovalent hydrocarbon group such as methyl. The diorganopolysiloxane desirably has a viscosity of 20 to 1,000,000 mPa-s at 25°C. The diorganopolysiloxane as component (A) may be prepared by any well-known techniques.

Component (B) is a bis(alkoxysilylalkyl)disiloxane compound, which provides the RTV organopolysiloxane composition with a fast curability and adherence to various substrates. In particular, when an article comprising a substrate having the composition coated thereon is immersed in hot water, component (B) serves to restrain the adhesion from lowering, that is, to impart durable adhesion in hot water.

The preferred component (B) is a disiloxane compound having the general formula (3): 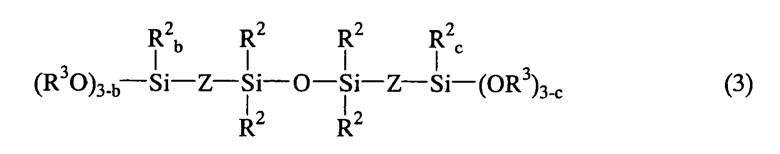 wherein Z and R² are as defined above, R³ is C₁-C₁₀ alkyl or C₂-C₁₀ alkoxyalkyl, each of b and c is 0 or 1.

Each of b and c is 0 or 1, preferably 0, while they may be equal or different. R³ is selected from among C₁-C₁₀ alkyl groups such as methyl, ethyl, propyl, butyl and octyl, and C₂-C₁₀ alkoxyalkyl groups such as methoxymethyl, methoxyethyl and ethoxymethyl, with methyl or ethyl being preferred.

Examples of the disiloxane compound (B) include, but are not limited to, 1,3-bis[(trimethoxysilyl)ethyl]-1,1,3,3-tetramethyldisiloxane, 1,3-bis[(triethoxysilyl)ethyl]-1,1,3,3-tetramethyldisiloxane, 1,3-bis[(methyldimethoxysilyl)ethyl]-1,1,3,3-tetramethyldisiloxane, 1-[(trimethoxysilyl)ethyl]-3-[(triethoxysilyl)ethyl]-1,1,3,3-tetramethyldisiloxane, and 1-[(methyldimethoxysilyl)ethyl]-3-[(trimethoxysilyl)ethyl]-1,1,3,3-tetramethyldisiloxane. The bis(alkoxysilylalkyl)disiloxanes may be used alone or in admixture of two or more. Among others, 1,3-bis[(trimethoxysilyl)ethyl]-1,1,3,3-tetramethyldisiloxane and 1,3-bis[(triethoxysilyl)ethyl]-1,1,3,3-tetramethyldisiloxane are preferred, with the former being most preferred.

The bis(alkoxysilylalkyl)disiloxanes illustrated above may be readily synthesized by reacting 1,1,3,3-tetramethyldisiloxane with a vinyl-containing alkoxysilane in the presence of a well-known hydrosilylation catalyst such as a platinum or rhodium compound. In most cases, the reaction product contains addition isomers. For example, 1,3-bis[(trimethoxysilyl)ethyl]-1,1,3,3-tetramethyldisiloxane may be synthesized from reaction of 1,1,3,3-tetramethyldisiloxane with vinyltrimethoxysilane in the presence of a platinum compound whereupon the reaction product contains 1,3-bis[2-(trimethoxysilyl)ethyl]-1,1,3,3-tetramethyldisiloxane, 1-[2-(trimethoxysilyl)ethyl]-3-[1-(trimethoxysilyl)ethyl]-1,1,3,3-tetramethyldisiloxane, and 1,3-bis[1-(trimethoxysilyl)ethyl]-1,1,3,3-tetramethyldisiloxane. The reaction product may be directly used without separation because the isomers are not detrimental to the objects of the invention and because of economy.

Component (B) is used in an amount of 0.5 to 20 parts by weight per 100 parts by weight of component (A). Where R¹ in formula (1) is hydrogen, component (B) is preferably used in such amounts that the molar amount of alkoxy groups in component (B) exceeds the molar amount of hydroxyl groups in component (A).

Component (C) is a cure promoting catalyst, which may be selected from organic carboxylic acid salts and alkoxides of metals such as tin, titanium, zirconium, iron, antimony, bismuth and manganese, organic titanates, and organic titanium chelates. Examples include tin compounds such as dibutyltin dilaurate, dibutyltin dioctoate, dioctyltin dilaurate, dibutyltin maleate, dimethyltin dineodecanoate, dibutyltin dimethoxide, dioctyltin dineodecanoate, and stannous octoate; titanium compounds such as tetrabutyl titanate, diisopropoxybis(acetylacetonato)titanium, diisopropoxybis(ethylacetoacetate)titanium; amine compounds such as dibutylamine, laurylamine, tetramethylguanidine, and tetramethylguanidylpropyltrimethoxysilane, and salts thereof. They may be used alone or in admixture of two or more. Addition of organotin compounds is preferred because the resulting composition has better curing properties including fast cure and depth cure. Inter alia, dialkyltin dialkoxides and dialkyltin dicarboxylates are more preferred. Component (C) is used in an amount of 0.001 to 20 parts, and more preferably 0.01 to 5 parts by weight per 100 parts by weight of component (A).

In addition to the foregoing components (A) to (C), preferably the composition may further comprise (D) a silane coupling agent because it is effective in enhancing the curing rate and the adhesion of the composition to various substrates. Component (D) may be any of silane coupling agents well known in the art. Compounds having an alkoxysilyl or alkenoxysilyl group as a hydrolyzable group are preferred, examples of which include
vinyltris(β-methoxyethoxy)silane,
γ-methacryloxypropyltrimethoxysilane,
β-(3,4-epoxycyclohexyl)ethyltrimethoxysilane,
γ-glycidoxypropyltrimethoxysilane,
γ-glycidoxypropylmethyldiethoxysilane,
N-β-(aminoethyl)-γ-aminopropyltrimethoxysilane,
γ-aminopropyltriethoxysilane,
3-(N-aminomethylbenzylamino)propyltrimethoxysilane,
N,N'-bis[3-(trimethoxysilyl)propyl]ethylenediamine,
N,N-bis[3-(trimethoxysilyl)propyl]amine,
γ-mercaptopropyltrimethoxysilane,
γ-glycidoxypropyltriisopropenoxysilane,
γ-glycidoxypropylmethyldiisopropenoxysilane,
   the reaction product of (meth)acrylsilane and aminosilane, the reaction product of epoxysilane and aminosilane, and the reaction product of aminosilane and haloalkyl-containing silane. A silane coupling agent having at least one amino group in the molecule is preferred.

The silane coupling agent is used in an amount of 0.1 to 20 parts, and more preferably 0.5 to 10 parts by weight per 100 parts by weight of component (A). Less than 0.1 part of the silane coupling agent may fail to enhance adhesion whereas more than 20 parts may be costly and detract from durable adhesion in hot water.

In addition to the foregoing components (A) to (C) or (A) to (D), preferably the composition may further comprise (E) calcium carbonate. Component (E) serves to improve the depth cure of the composition, impart better mechanical properties to the cured composition, and impart more adhesion under harsh conditions as in hot water immersion. Specifically, component (E) is selected from heavy or ground calcium carbonate and colloidal or precipitated calcium carbonate, which may be optionally surface treated with organic acids such as fatty acids and resin acids, alkali metal salts of organic acids, or organic acid esters, all in powder form. Of these, colloidal calcium carbonate is preferred, with colloidal calcium carbonate fine powder surface treated with organic acids such as fatty acids and resin acids being more preferred. Preferably component (E) has a specific surface area of 5 to 50 m²/g, and more preferably 10 to 40 m²/g, as measured by BET method, but is not limited thereto.

Component (E) is used in an amount of 10 to 200 parts, and more preferably 30 to 150 parts by weight per 100 parts by weight of component (A). Outside the range, smaller amounts of component (E) may fail to improve the desired properties, whereas larger amounts may deprive the composition of ease of handling or working.

Any of well-known additives other than the foregoing may be added to the composition as long as they do not compromise the desired effects. Suitable additives include inorganic fillers in fine powder form, for example, dry silica, wet silica, finely divided quartz, titanium dioxide powder, diatomaceous earth powder, aluminum hydroxide powder, finely divided alumina, magnesia powder, and zinc oxide powder, which may be optionally surface treated with silanes, silazanes, low degree-of-polymerization polysiloxanes or the like. These inorganic fillers may be used in an amount of 10 to 200 parts, and more preferably 30 to 150 parts by weight per 100 parts by weight of component (A). Another suitable additive is a component for providing the (cured) silicone rubber with a lower modulus. Also included are dialkoxysilanes such as diphenyldimethoxysilane and dimethyldimethoxysilane, both end trimethylsiloxy-capped dimethylpolysiloxane, isoparaffin, flame retardants such as platinum compounds and zinc carbonate powder, thixotropic agents such as polyether, colorants such as pigments, dyes and fluorescent brighteners, heat resistance improvers such as red iron oxide and cerium oxide, freeze resistance improvers, anti-rust agents, mildew-proofing agents, and antiseptic agents. Solvents such as toluene, xylene, gasoline, cyclohexane, methylcyclohexane, and low-boiling isoparaffin may also be added.

The RTV compositions are found to be good at fast cure. Preferably they are "fast cure" in the sense that the time taken until the hardness of a composition being cured reaches 50% of the ultimate hardness is within 4 hours in an environment of 23°C and relative humidity 50%, the hardness being measured by type A Durometer according to JIS K 6253. For practical purposes, preferably a hardness of at least 15 in type A Durometer scale is reached within 3 hours.

As mentioned above, the RTV organopolysiloxane composition is fast curable and fully adherent to substrates with an active surface such as float glass, and maintains reliable adhesion even in a harsh environment, as immersed in hot water, over a long term. Accordingly, the composition is advantageously used in the application where such properties are required, for example, as water-proof sealing materials and structure joint sealing materials in the building and construction applications, and secondary sealing materials in double-glazed units.

### EXAMPLE

Examples of the invention are given below by way of illustration and not by way of limitation. In Examples, the viscosity is a measurement at 25°C. All parts are by weight. The methods of evaluating the cure and durable adhesion in hot water of compositions are described later.

### Synthesis Example 1

A four-neck flask equipped with a reflux condenser, stirrer, dropping funnel and thermometer was thoroughly purged with nitrogen. In the nitrogen blanket, the flask was charged with 672 g of 1,1,3,3-tetramethyldisiloxane and 0.65 g of a 50 wt% toluene solution of divinyltetramethyldisiloxane-platinum complex. The flask was heated at 70 to 80°C and maintained at such a temperature that the reflux of contents was visually observed on the inlet inner wall of the condenser. With stirring, 1,500 g of vinyltrimethoxysilane was added dropwise from the dropping funnel to the mixture. The reflux of contents was not visually observable at the point of time when approximately a half portion of vinyltrimethoxysilane was added, whereupon the rate of addition was kept identical and the temperature was kept uncontrolled. After 4 hours, dropwise addition of all the vinyltrimethoxysilane was complete. The internal temperature was 110°C at this point. With the temperature kept as such, the reaction solution was aged for 3 hours until the reaction was completed. With the reactor kept at 120°C and a vacuum below 5 mmHg, the excess of vinyltrimethoxysilane and low-boiling by-products were evaporated off over 2 hours. The product was analyzed by gas chromatography to find a purity of 97% 1,3-bis[(trimethoxysilyl)ethyl]-1,1,3,3-tetramethyldisiloxane. The product as recovered, designated bis(alkoxysilylalkyl)disiloxane I, was used in Examples described below.

### Example 1

To 100 parts of both end hydroxyl-capped polydimethylsiloxane having a viscosity of 5,000 mPa-s was added 100 parts of colloidal calcium carbonate (Carlex® 300, Maruo Calcium Co., Ltd.). The mixture was uniformly milled on a three-roll mill to form a base compound.

A curing agent was prepared by mixing 25 parts of both end trimethylsiloxy-capped polydimethylsiloxane having a viscosity of 5,000 mPa-s with 10 parts of carbon black, 30 parts of bis(alkoxysilylalkyl)disiloxane I (in Synthesis Example 1), 3 parts of N-β-(aminoethyl)-γ-aminopropyltrimethoxysilane, and 0.1 part of dimethyltin dineodecanoate. The base compound and the curing agent were mixed in a weight ratio of 10:1, giving an RTV organopolysiloxane composition.

### Comparative Example 1

An RTV organopolysiloxane composition was prepared as in Example 1 except that n-propyl silicate was used instead of bis(alkoxysilylalkyl)disiloxane I.

### Comparative Example 2

An RTV organopolysiloxane composition was prepared as in Example 1 except that a partial hydrolytic condensate of methyltrimethoxysilane (a mixture of oligomers having a degree of polymerization of 2 to 8) was used instead of bis(alkoxysilylalkyl)disiloxane I.

### Example 2

An RTV organopolysiloxane composition was prepared as in Example 1 except that 5 parts of N,N'-bis[3-(trimethoxysilyl)propyl]ethylenediamine was used instead of 3 parts of N-β-(aminoethyl)-γ-aminopropyltrimethoxysilane, and the amount of dimethyltin dineodecanoate was changed from 0.1 part to 0.05 part.

### Comparative Example 3

An RTV organopolysiloxane composition was prepared as in Example 2 except that a partial hydrolytic condensate of methyltrimethoxysilane was used instead of bis(alkoxysilylalkyl)disiloxane I.

### Example 3

An RTV organopolysiloxane composition was prepared as in Example 1 except that 3 parts of 3-(N-aminomethylbenzylamino)propyltrimethoxysilane and 2 parts of N,N,N',N'-tetramethylguanidine were used instead of 3 parts of N-β-(aminoethyl)-γ-aminopropyltrimethoxysilane.

### Comparative Example 4

An RTV organopolysiloxane composition was prepared as in Example 3 except that a partial hydrolytic condensate of methyltrimethoxysilane (a mixture of oligomers having a degree of polymerization of 2 to 8) was used instead of bis(alkoxysilylalkyl)disiloxane I.

The organopolysiloxane compositions of Examples 1 to 3 and Comparative Examples 1 to 4 were examined for cure and durable adhesion in hot water by the following tests. It is noted that since the composition of Comparative Example 4 showed considerably inferior results on the cure test, the hot water adhesion test was omitted.

### Cure test

An RTV organopolysiloxane composition was applied to a buildup of about 6 mm and allowed to stand at a temperature 23°C and relative humidity 50%. After 3 hours and 7 days from the completion of composition preparation, hardness was measured by means of type A Durometer according to JIS K 6253, for evaluating cure. When hardness is unmeasurable due to under-cure, this is reported as UM.

### Hot water adhesion test

An RTV organopolysiloxane composition was applied to a float glass plate as a substrate to form H-shaped blocks according to JIS A 1439. Some H-shaped blocks were allowed to stand in an atmosphere of 23°C and 50% RH for 7 days and then in a dryer conditioned at 50°C for another 7 days. On these H-shaped blocks, a tensile bond strength test was performed to determine a maximum tensile stress and an elongation at maximum load. At the same time, the failure mode of silicone rubber was evaluated by visual observation. These results are reported as initial data. Next, an accelerated degradation test for evaluating adhesion in water over a long term was carried out by immersing the remaining H-shaped blocks in hot water at 80°C for 28 days, taking them out, and measuring a maximum tensile stress and an elongation at maximum load while visually observing the failure mode of silicone rubber. These results are reported as data after hot water immersion. The failure mode of silicone rubber was evaluated by visually observing the area in fracture where cohesive failure of silicone rubber occurred and reporting a proportion of that area as percent cohesive failure. Specifically, a sample where the overall fracture section is cohesive failure of silicone rubber has a cohesive failure of 100%, indicating satisfactory adhesion. A sample where the overall fracture section is interfacial peeling has a cohesive failure of 0%, indicating poor adhesion.

The results of these tests are shown in Table 1.

**Table 1**

| | | | Example | | | Comparative Example | | | |
|---|---|---|---|---|---|---|---|---|---|
| | | | 1 | 2 | 3 | 1 | 2 | 3 | 4 |
| Cure test | Hardness (JIS A) | After 3 hr | 33 | 36 | 17 | 2 | 8 | 30 | UM |
| | | After 7 days | 52 | 46 | 44 | 54 | 57 | 39 | 51 |
| Hot water adhesion test | Initial | Maximum tensile stress (N/mm²) | 1.07 | 0.93 | 0.96 | 0.97 | 1.06 | 0.93 | not tested |
| | | Elongation at maximum load (%) | 55 | 69 | 80 | 65 | 47 | 39 | |
| | | Cohesive failure (%) | 100 | 100 | 100 | 100 | 100 | 100 | |
| | After hot water immersion (80°C water/ 28 days) | Maximum tensile stress (N/mm²) | 0.51 | 0.56 | 0.59 | 0.15 | 0.36 | 0.55 | |
| | | Elongation at maximum load (%) | 100 | 124 | 88 | 36 | 28 | 48 | |
| | | Cohesive failure (%) | 100 | 100 | 100 | 0 | 0 | 0 | |

As seen from Table 1, the RTV organopolysiloxane compositions of Examples 1 to 3 are fully curable and adherent and their bond is little reduced even after exposure to a harsh environment as immersed in hot water over a long term. The compositions are advantageously used, for example, as water-proof sealing materials and structure joint sealing materials in the building and construction applications, secondary sealing materials in double-glazed units, and sealing materials to glass and aluminum.

In respect of numerical ranges disclosed herein it will of course be understood that in the normal way the technical criterion for the upper limit is different from the technical criterion for the lower limit, i.e. the upper and lower limits are intrinsically distinct proposals.

## Claims

1. A room temperature curable organopolysiloxane composition comprising
(A) 100 parts by weight of diorganopolysiloxane capped at both ends of its molecular chain with hydroxysilyl, alkoxysilyl or alkoxyalkoxysilyl group and having a viscosity of 20 to 1,000,000 mPa-s at 25°C,
(B) 0.5 to 20 parts by weight of bis(alkoxysilylalkyl)disiloxane compound, and
(C) 0.001 to 20 parts by weight of curing catalyst.

2. The composition of claim 1 wherein the diorganopolysiloxane (A) has the general formula (1): 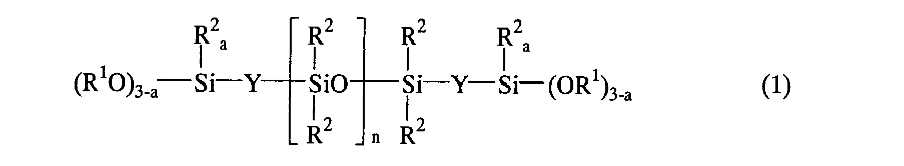 wherein R¹ is hydrogen, C₁-C₁₀ alkyl or C₂-C₁₀ alkoxyalkyl, R² is a C₁-C₁₀ group selected from the group consisting of a monovalent hydrocarbon group, monovalent halogenated hydrocarbon group, and cyanoalkyl group, "a" is 2 when R¹ is hydrogen and 0 or 1 when R¹ is C₁-C₁₀ alkyl or C₂-C₁₀ alkoxyalkyl, Y is oxygen, a divalent C₁-C₆ hydrocarbon group or a group of the general formula (2): 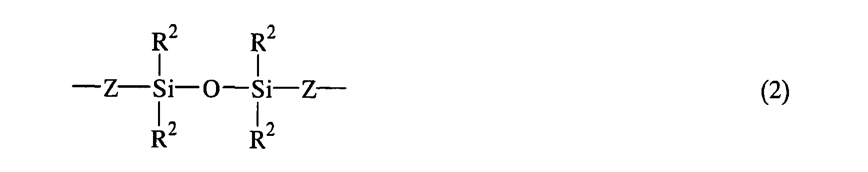 wherein R² is as defined above and Z is a divalent C₁-C₆ hydrocarbon group, and n is such a number that the diorganopolysiloxane may have a viscosity of 20 to 1,000,000 mPa-s at 25°C.

3. The composition of claim 1 or 2 wherein the disiloxane compound (B) has the general formula (3): 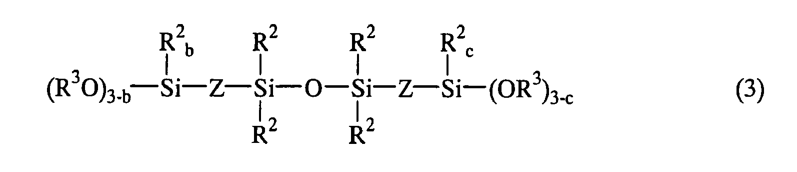 wherein Z and R² are as defined in claim 2, R³ is C₁-C₁₀ alkyl or C₂-C₁₀ alkoxyalkyl, b and c are each 0 or 1.

4. The composition of any one of claims 1 to 3 wherein component (C) is an organotin compound.

5. The composition of any one of claims 1 to 4, further comprising (D) 0.1 to 20 parts by weight of silane coupling agent.

6. The composition of claim 5 wherein the silane coupling agent has at least one amino group in the molecule.

7. The composition of any one of claims 1 to 6, further comprising (E) 10 to 200 parts by weight of calcium carbonate.

8. Use of a composition according to any one of claims 1 to 7 as a sealing material.
